# DEMANDE DE BREVET EUROPEEN

(11) **EP 3 808 620 A1**
(43) Date de publication de la demande: **21.04.2021**
(21) Numéro de dépôt: 20201812.3
(22) Date de dépôt: 14.10.2020
(51) Int. Cl.: B60W 10/08, B60W 10/26, B60W 20/13, B60L 15/20, B60W 20/14, B60K 1/02, B60K 6/28, B60K 6/46

(54) **PROCÉDÉ DE GESTION D'ÉNERGIE DANS UN VÉHICULE HYBRIDE**

(30) Priorité: 16.10.2019 FR 1911551
(71) Demandeur: ALSTOM Transport Technologies, 93400 Saint-Ouen (FR)
(72) Inventeur: HIBON, Samuel, 72000 LE MANS (FR); ROUILLE, Bruno, 65200 ORDIZAN (FR); ABDRAKHMANOV, Rustem, 92320 CHATILLON (FR)
(74) Mandataire: Lavoix

(57) **Abrégé**

La présente invention concerne un procédé de gestion d'énergie dans un véhicule (10) comprenant deux chaînes de traction (12) comprenant chacune un organe de stockage d'énergie (16) et un organe de production d'énergie (18), le procédé comprenant :
- la réception de premières données définissant un type de mission affectée au véhicule (10),
- la détermination d'un critère de gestion d'énergie correspondant, selon une table de correspondance, aux premières données,
- la réception d'un besoin en énergie pour le véhicule (10),
- la réception, pour chaque organe, d'une deuxième donnée relative à l'état courant de l'organe, et
- la détermination et l'envoi, à chaque organe, d'une commande définissant une quantité d'énergie à délivrer ou à stocker par l'organe en fonction du besoin en énergie et des deuxièmes données de sorte à satisfaire le critère de gestion d'énergie et le besoin en énergie.

## Description

L'invention concerne un procédé de gestion d'énergie dans un véhicule hybride. L'invention porte aussi sur un tel véhicule hybride.

Un véhicule hybride est un moyen de transport à moteur qui fonctionne au moyen de plusieurs sources d'énergie, par exemple, électrique et thermique. Un tel véhicule hybride comprend classiquement des organes de stockage d'énergie, tels que des batteries, et des organes de production d'énergie, tels que des générateurs.

De tels organes sont classiquement commandés par une même unité de commande afin de satisfaire le besoin en énergie du véhicule. Typiquement, l'unité de commande est configurée pour envoyer la même commande aux différents organes de sorte à satisfaire au moins une partie du besoin en énergie.

Les organes du véhicule sont donc sollicités de la même manière indépendamment de leur état courant. Par exemple, un organe ayant un état d'usure élevé sera sollicité de la même manière qu'un organe ayant un état d'usure faible. De manière similaire, un organe de stockage ayant un état de charge bas sera sollicité de la même manière qu'un organe de stockage ayant un état de charge élevé.

Une telle sollicitation est susceptible de limiter les performances énergétiques du véhicule ou la durée de vie de certains organes du véhicule. Ainsi, les différents organes ne sont pas exploités de manière optimale.

Il existe donc un besoin pour améliorer la gestion de l'énergie dans un véhicule hybride.

A cet effet, la présente description a pour objet un procédé de gestion d'énergie dans un véhicule hybride, le véhicule hybride étant destiné à être affecté à une mission, le véhicule hybride comprenant au moins deux chaînes de traction et une unité de commande, l'unité de commande ayant accès à une table de correspondance associant un type de mission à au moins un critère de gestion d'énergie parmi un ensemble de critères de gestion d'énergie, chaque chaîne de traction comprenant au moins un organe de stockage d'énergie et au moins un organe de production d'énergie, chaque organe de stockage d'énergie étant propre à être commandé par l'unité de commande pour délivrer ou stocker une quantité d'énergie, chaque organe de production d'énergie étant propre à être commandé par l'unité de commande pour délivrer une quantité d'énergie, le procédé étant mis en oeuvre par l'unité de commande et comprenant :
- la réception de premières données définissant un type de mission affectée au véhicule hybride,
- la détermination du ou des critères de gestion d'énergie correspondant, selon la table de correspondance, au type de mission défini par les premières données,
- la réception d'un besoin en énergie pour le véhicule hybride,
- la réception, pour chaque organe de chaque chaîne de traction, d'au moins une deuxième donnée relative à l'état courant de l'organe, et
- la détermination et l'envoi, à chaque organe de chaque chaîne de traction, d'une commande spécifique définissant une quantité spécifique d'énergie à délivrer ou à stocker par l'organe en fonction du besoin en énergie et des deuxièmes données reçues de sorte à satisfaire le ou chaque critère de gestion d'énergie déterminé et au moins partiellement le besoin en énergie.

Selon des modes de mise en oeuvre particuliers, le procédé comprend une ou plusieurs des caractéristiques suivantes, prise(s) isolément ou suivant toutes les combinaisons techniquement possibles :
- le procédé comprend la délivrance ou le stockage d'une quantité d'énergie, par chaque organe de chaque chaîne de traction, selon la commande spécifique déterminée pour l'organe ;
- pour au moins un organe, la au moins une deuxième donnée est issue d'une mesure effectuée par au moins un capteur de mesure associé à l'organe ;
- pour chaque organe, la au moins une deuxième donnée est choisie parmi au moins l'une des données suivantes : l'état de charge de l'organe pour un organe de stockage, la puissance maximale de charge pour un organe de stockage, la puissance maximale de décharge pour un organe de stockage, la réserve en énergie de l'organe pour un organe de production, la puissance instantanée maximale disponible pour un organe de production, l'état d'usure de l'organe et la température de l'organe ;
- lorsque les premières données définissent un type de mission impliquant d'optimiser l'état énergétique des organes des chaînes de traction, au moins l'un des critères de gestion d'énergie stipule que l'énergie de traction est fournie en priorité par les organes de stockage ayant l'état de charge le plus élevé ou par les organes de production ayant la réserve en énergie la plus élevée et que l'énergie de freinage est fournie en priorité aux organes de stockage ayant l'état de charge le plus faible ;
- lorsque les premières données définissent un type de mission impliquant de minimiser l'état d'usure des organes des chaînes de traction, au moins l'un des critères de gestion d'énergie stipule que l'énergie de traction est fournie en priorité par les organes de stockage ou par les organes de production ayant l'état d'usure le plus faible et que l'énergie de freinage est fournie en priorité aux organes de stockage ayant l'état d'usure le plus faible ;
- lorsque les premières données définissent un type de mission impliquant de minimiser l'état d'usure des organes des chaînes de traction, au moins l'un des critères de gestion d'énergie stipule que l'énergie de traction est fournie en priorité par les organes de stockage ou par les organes de production ayant la température la plus faible et que l'énergie de freinage est fournie en priorité aux organes de stockage ayant la température la plus faible ;
- lorsque les premières données définissent un type de mission impliquant d'optimiser les performances des organes des chaînes de traction, au moins l'un des critères de gestion d'énergie stipule que l'énergie de traction est fournie en priorité par les organes de production ayant un point de fonctionnement constant et optimal, l'énergie de freinage étant fournie en priorité aux organes de stockage ayant l'état de charge le plus faible.

La présente description se rapporte aussi à un produit programme d'ordinateur comportant des instructions logicielles, les instructions logicielles mettant en œuvre le procédé de gestion selon le premier aspect de l'invention, lorsque les instructions logicielles sont exécutées par un calculateur.

La présente invention porte également sur un véhicule hybride destiné à être affecté à une mission, le véhicule hybride comprenant au moins deux chaînes de traction et une unité de commande, l'unité de commande ayant accès à une table de correspondance associant un type de mission à au moins un critère de gestion d'énergie parmi un ensemble de critères de gestion d'énergie, chaque chaîne de traction comprenant au moins un organe de stockage d'énergie et au moins un organe de production d'énergie, chaque organe de stockage d'énergie étant propre à être commandé par l'unité de commande pour délivrer ou stocker une quantité d'énergie, chaque organe de production d'énergie étant propre à être commandé par l'unité de commande pour délivrer une quantité d'énergie, l'unité de commande étant configurée pour mettre en œuvre les étapes suivantes :
- la réception de premières données définissant un type de mission affectée au véhicule hybride,
- la détermination du ou des critères de gestion d'énergie correspondant, selon la table de correspondance, au type de mission défini par les premières données,
- la réception d'un besoin en énergie pour le véhicule hybride,
- la réception, pour chaque organe de chaque chaîne de traction, d'au moins une deuxième donnée relative à l'état courant de l'organe, et
- la détermination et l'envoi, à chaque organe, d'une commande spécifique définissant une quantité spécifique d'énergie à délivrer ou à stocker par l'organe en fonction du besoin en énergie et des deuxièmes données reçues de sorte à satisfaire le ou chaque critère de gestion d'énergie déterminé et au moins partiellement le besoin en énergie.

D'autres caractéristiques et avantages de l'invention apparaîtront à la lecture de la description qui suit, de modes de réalisation de l'invention, donnés à titre d'exemple uniquement et en référence aux dessins qui sont :
[Fig 1] la figure 1 est une représentation schématique d'une portion d'un véhicule hybride comprenant un poste de conduite, deux chaînes de traction et une unité de commande,
[Fig 2] la figure 2 est une représentation schématique d'un exemple de l'unité de commande de la figure 1, et
[Fig 3] la figure 3 est un organigramme d'un exemple de mise en œuvre d'un procédé de gestion d'énergie.

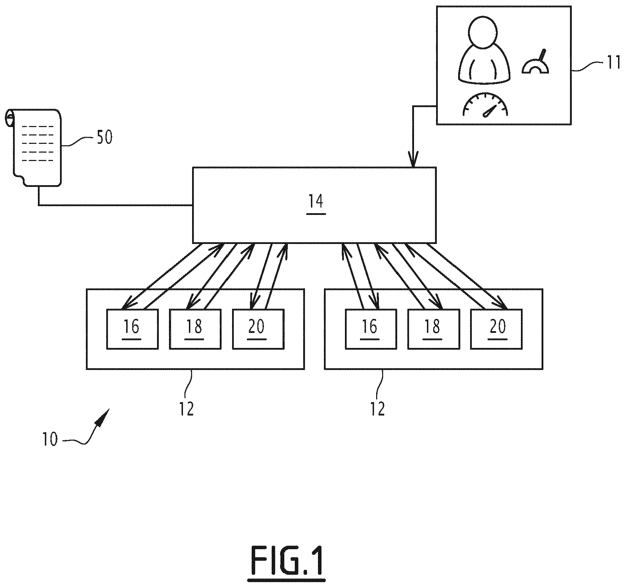

Un exemple d'une portion d'un véhicule hybride 10 est illustré par la figure 1. Le véhicule hybride 10 est un véhicule fonctionnant au moyen de plusieurs sources d'énergie. Par exemple, le véhicule hybride 10 est un véhicule ferroviaire, tel qu'un train, un métro ou un tramway.

Le véhicule hybride 10 est destiné à être affecté à une mission. Il est entendu par le terme « mission », une action destinée à être effectuée par le véhicule. Une telle mission est par exemple, un trajet spécifique destiné à être parcouru par le véhicule, et/ou un type de charge destiné à être transporté par le véhicule (humain, bétail, transport de marchandises).

Comme cela sera décrit dans ce qui suit, la mission affectée au véhicule hybride 10 influe sur la gestion de l'énergie au sein du véhicule hybride 10.

Dans l'exemple illustré par la figure 1, le véhicule hybride 10 comprend un poste de conduite 11, deux chaînes de traction 12 et une unité de commande 14.

Le poste de conduite 11 désigne le compartiment à l'avant du véhicule 10 qui comprend les commandes du véhicule 10. Les commandes du véhicule 10 sont, par exemple, activées manuellement par le conducteur du véhicule 10, semi-automatiquement, voire automatiquement. Les commandes du véhicule 10 sont notamment propres à générer des ordres d'accélération ou de freinage du véhicule 10, ce qui est à l'origine d'un besoin en énergie pour le véhicule 10.

Les chaînes de traction 12 sont propres à fournir au véhicule hybride 10 l'énergie de traction propre au fonctionnement du véhicule 10. Les chaînes de traction 12 sont également propres à stocker l'énergie de freinage générée lors d'un freinage du véhicule hybride 10.

Dans l'exemple illustré sur la figure 1, le véhicule hybride 10 comprend deux chaînes de traction 12. Toutefois, le véhicule hybride 10 est susceptible de comprendre un nombre de chaînes de traction 12 supérieur à deux.

Comme illustré sur la figure 1, chaque chaîne de traction 12 comprend au moins un organe de stockage d'énergie 16 et au moins un organe de production d'énergie 18. Avantageusement, comme illustré sur la figure 1, chaque chaîne de traction 12 comprend au moins un organe auxiliaire de consommation d'énergie 20.

Chaque organe de stockage d'énergie 16 est propre à stocker et à délivrer de l'énergie, l'énergie ayant, par exemple, été produite par le ou les organes de production d'énergie 18 ou lors d'un freinage du véhicule hybride 10. L'énergie délivrée est, par exemple, utilisée pour assurer la traction ou le freinage du véhicule 10 ou l'alimentation en énergie des organes auxiliaires de consommation d'énergie 20.

Chaque organe de stockage d'énergie 16 comprend un état de charge définissant la quantité d'énergie stockée par l'organe 16.

Chaque organe de stockage d'énergie 16 comprend un état d'usure définissant le niveau d'usure de l'organe 16. L'état d'usure prend, par exemple, en compte le vieillissement de l'organe 16.

Chaque organe de stockage d'énergie 16 comprend une limitation de courant de charge ou de décharge qui dépend de la température et de l'usage passé de l'organe 16 au cours de la mission.

Chaque organe de stockage 16 est, par exemple, une batterie, typiquement une batterie électrique rechargeable, un condensateur au Lithium (lithium Capacitor) ou encore un super condensateur ou un système de volant d'inertie.

Chaque organe de production d'énergie 18 est propre à délivrer une quantité d'énergie et donc de puissance. L'énergie délivrée est, par exemple, utilisée pour assurer la traction ou le freinage du véhicule 10 ou l'alimentation en énergie des organes auxiliaires de consommation d'énergie 20.

Chaque organe de production d'énergie 18 comprend une réserve en énergie définissant la quantité d'énergie susceptible d'être produite par l'organe 18. La réserve en énergie dépend notamment de la quantité de combustible (par exemple diesel ou hydrogène) en réserve pour permettre à l'organe de production 18 de délivrer de l'énergie.

Chaque organe de production d'énergie 18 comprend un état d'usure définissant le niveau d'usure de l'organe 18. L'état d'usure prend, par exemple, en compte le vieillissement de l'organe 18.

Chaque organe de production d'énergie 18 comprend un rendement permettant de privilégier certains points de fonctionnement où la consommation de combustible est minimale pour une puissance électrique nette donnée.

Avantageusement, chaque organe de production d'énergie 18 est une source primaire, aussi appelée générateur, telle qu'une pile à hydrogène ou un générateur diesel.

Chaque organe auxiliaire de consommation d'énergie 20 est propre à consommer de l'énergie. L'organe auxiliaire 20 est avantageusement alimenté en énergie par l'organe de stockage 16 ou par l'organe de production 18.

Chaque organe auxiliaire de consommation d'énergie 20, est, par exemple, un organe pour le confort passager, tel qu'une climatisation, un chauffage ou un éclairage ou encore un organe tel qu'un système de ventilation/refroidissement ou un système de circulation de fluide ou encore des électroniques de commande pour les systèmes de production d'énergie et pour la traction.

L'unité de commande 14 est configurée pour commander chaque organe de stockage 16 pour la délivrance ou le stockage d'une quantité d'énergie et à commander chaque organe de production 18 pour la délivrance d'une quantité d'énergie.

L'unité de commande 14 est configurée pour interagir, d'une part, avec le poste de pilotage 11 pour recevoir un besoin en énergie (donc en puissance) pour le véhicule 10 et, d'autre part, avec les organes de stockage d'énergie 16 et de production d'énergie 18 de chaque chaîne de traction 12 pour permettre la satisfaction d'au moins une partie du besoin en énergie/puissance. Avantageusement, l'unité de commande 14 est également configurée pour interagir avec les organes auxiliaires de consommation d'énergie 20.

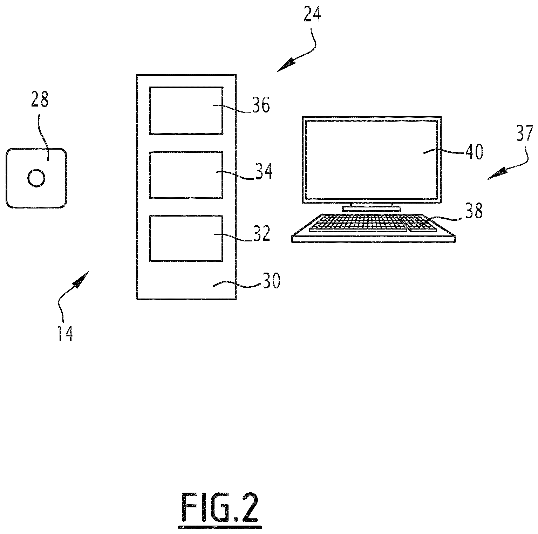

Un exemple d'unité de commande 14 est illustré sur la figure 2. Dans cet exemple, l'unité de commande 14 comporte un calculateur 24.

Le calculateur 24 est propre à interagir avec un produit programme d'ordinateur 28. L'interaction du produit programme d'ordinateur 28 avec le calculateur 24 permet de mettre en œuvre un procédé de gestion d'énergie pour le véhicule hybride 10.

Le calculateur 24 est un ordinateur. Plus généralement, le calculateur 24 est un calculateur électronique propre à manipuler et/ou transformer des données représentées comme des quantités électroniques ou physiques dans des registres du calculateur 24 et/ou des mémoires en d'autres données similaires correspondant à des données physiques dans des mémoires, des registres ou d'autres types de dispositifs d'affichage, de transmission ou de mémorisation.

Le calculateur 24 comporte un processeur 30 comprenant une unité de traitement 32, des mémoires 34 et un lecteur 36 de support d'informations. Dans l'exemple illustré par la figure 2, le calculateur 24 comprend, également, une interface homme-machine 37 comprenant, par exemple, un clavier 38 et/ou une interface tactile et un afficheur 40.

Le produit programme d'ordinateur 28 comporte un support lisible d'informations. Un support lisible d'informations est un support lisible par le calculateur 24, usuellement par l'unité de traitement 32 du calculateur 24. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique. En variante, le support est une clé USB ou carte SD.

Sur le support lisible d'informations est mémorisé un programme d'ordinateur comprenant des instructions de programme. Le programme d'ordinateur est chargeable sur l'unité de traitement de données 22 et est adapté pour entraîner la mise en œuvre d'un procédé de gestion d'énergie pour le véhicule hybride 10.

L'unité de commande 14 a accès à une table de correspondance 50 qui associe un type de mission affectée au véhicule à au moins un critère de gestion d'énergie parmi un ensemble de critères de gestion d'énergie.

En particulier, les critères de gestion d'énergie sont formulés en fonction du type de mission affecté au véhicule.

Le type de mission définit un mode de fonctionnement associé au véhicule hybride 10 durant la mission. Le mode de fonctionnement, défini par le type de mission, a un impact sur l'état et/ou les performances d'au moins un organe de stockage 16 et/ou d'au moins un organe de production 18 du véhicule hybride 10. Le critère d'énergie associé au type de mission est de préférence indépendant de la position du véhicule hybride 10 au cours de la mission.

Par exemple, lorsque le type de mission implique d'optimiser l'état énergétique des organes des chaînes de traction 12, au moins l'un des critères de gestion d'énergie (premier critère C1) stipule que l'énergie de traction est fournie en priorité par les organes de stockage 16 ayant l'état de charge le plus élevé ou par les organes de production 18 ayant la réserve en énergie la plus élevée, et que l'énergie de freinage est fournie en priorité aux organes de stockage 16 ayant l'état de charge le plus faible.

Dans un autre exemple, lorsque le type de mission implique de minimiser l'état d'usure des organes des chaînes de traction 12, au moins l'un des critères de gestion d'énergie (deuxième critère C2) stipule que l'énergie de traction est fournie en priorité par les organes de stockage 16 ou par les organes de production 18 ayant l'état d'usure le plus faible et que l'énergie de freinage est fournie en priorité aux organes de stockage 16 ayant l'état d'usure le plus faible.

Dans encore un autre exemple, lorsque le type de mission implique de minimiser l'état d'usure des organes des chaînes de traction 12, au moins l'un des critères de gestion d'énergie (troisième critère C3) stipule que l'énergie de traction est fournie en priorité par les organes de stockage 16 ou par les organes de production 18 ayant la température la plus faible et que l'énergie de freinage est fournie en priorité aux organes de stockage 16 ayant la température la plus faible.

Dans encore un autre exemple, lorsque le type de mission implique d'optimiser les performances des organes des chaînes de traction 12, au moins l'un des critères de gestion d'énergie (quatrième critère C4) stipule que l'énergie de traction est fournie en priorité par des organes de production 18 ayant un point de fonctionnement constant et optimal et que le complément est fourni par les organes de stockage 16. L'énergie de freinage est fournie en priorité aux organes de stockage 16 ayant l'état de charge le plus faible.

Dans un dernier exemple, on peut concevoir que le système applique les critères C1 à C4 selon une priorité à définir avec l'utilisateur selon qu'il souhaite privilégier le coût total d'opération (TCO), le coût de maintenance ou le coût énergétique. En fonction du type de véhicule et de la mission, la minimisation du TCO peut positionner différemment les priorités des critères C1 à C4.

Par exemple, la table de correspondance 50 est mémorisée dans une mémoire 24 de l'unité de commande 14.

En variante, la table de correspondance 50 est mémorisée sur un serveur à distance de l'unité de commande 14, l'accès à la table de correspondance 50 se faisant alors suivant un protocole de transmission sans fil ou suivant un protocole de réseau de télécommunication cellulaire. Le protocole de transmission sans fil est, par exemple, établi suivant les normes du groupe IEEE 802.11 (Wi-Fi) ou du groupe IEEE 802.15 (Bluetooth). Le protocole de réseau de télécommunication cellulaire est, par exemple, établi selon la norme GSM (de l'anglais *Global System for Mobile Communications*) ou selon les technologies UMTS (de l'anglais *Universal Mobile Telecommunications System*) ou 4G, voire 5G.

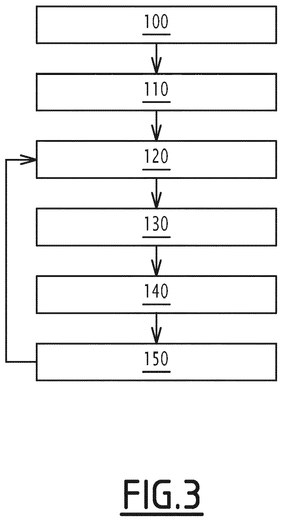

Un exemple de mise en œuvre d'un procédé de gestion d'énergie dans le véhicule hybride 10 va maintenant être décrit en référence à l'organigramme de la figure 3. Le procédé de gestion d'énergie est mis en œuvre par l'unité de commande 14 du véhicule 10.

Le procédé de gestion d'énergie comprend une étape 100 de réception de premières données définissant un type de mission affectée au véhicule. Les premières données sont, par exemple, sélectionnées parmi un ensemble de premières données par le conducteur du véhicule 10 dans la cabine de pilotage 11.

Les premières données, sont par exemple des données relatives au trajet parcouru par le véhicule ou au type de charge (humains, bétail, matériels) destinée à être transportée par le véhicule.

Avantageusement, les missions définies par les premières données sont catégorisées selon un nombre prédéterminé de types de missions. Les types de missions définis par les premières données sont par exemple choisis parmi : un type de mission impliquant d'optimiser l'état énergétique des organes des chaînes de traction 12, un type de mission impliquant de minimiser l'état d'usure des organes des chaînes de traction 12, un type de mission impliquant d'optimiser les performances des organes des chaînes de traction 12 et une combinaison des types précédents de mission selon des priorités.

Ces premières données peuvent être définies au début de chaque mission ou prédéterminées pour un véhicule qui effectuerait toujours le même type de mission.

Par exemple, pour des premières données relatives à un parcours contraignant d'un point de vue de la consommation en combustible, tel que l'hydrogène, le type de mission défini est d'optimiser l'état énergétique des organes des chaînes de traction 12, notamment des organes de production 18. Dans un autre exemple, pour des premières données relatives à un parcours contraignant en termes de performances (montées ou temps de parcours faisant appel à d'importantes accélérations), le type de mission défini est d'optimiser les performances des organes des chaînes de traction 12. Dans un dernier exemple, pour des premières données relatives à un besoin de minimiser les coûts de maintenance, le type de mission défini est d'optimiser le vieillissement des organes des chaînes de traction 12.

Le procédé comprend une étape 110 de détermination du ou des critères de gestion d'énergie correspondant, selon la table de correspondance 50, au type de mission défini par les premières données.

Avantageusement, lorsque les premières données définissent un type de mission impliquant d'optimiser l'état énergétique des organes des chaînes de traction 12, au moins l'un des critères de gestion d'énergie déterminé est le premier critère C1.

Avantageusement, lorsque les premières données définissent un type de mission impliquant d'optimiser l'état énergétique des organes des chaînes de traction 12, au moins l'un des critères de gestion d'énergie est le deuxième critère C2 et/ou le troisième critère C3.

Avantageusement, lorsque les premières données définissent un type de mission impliquant d'optimiser les performances des organes des chaînes de traction 12, au moins l'un des critères de gestion d'énergie est le quatrième critère C4.

Avantageusement, lorsque les premières données définissent un type de mission impliquant d'optimiser le coût total d'opération, au moins les critères de gestion d'énergie C1 à C4 sont classés par priorité.

Le procédé comprend, aussi, une étape 120 de réception d'un besoin en énergie/puissance pour le véhicule ferroviaire. Le besoin en énergie/puissance provient, par exemple, du poste de conduite 11 du véhicule 10. Le besoin en énergie est notamment formulé en réponse à une commande de traction ou de freinage du véhicule 10. Le besoin en énergie est, par exemple, exprimé en termes de quantité d'énergie à fournir ou à stocker.

Le procédé comprend une étape 130 de réception, pour chaque organe, de chaque chaîne de traction 12, d'au moins une deuxième donnée relative à l'état courant de l'organe.

Par exemple, pour au moins un organe, la ou au moins une deuxième donnée est issue d'une mesure effectuée par au moins un capteur sur l'organe. Dans ce cas, par exemple, chaque organe comprend un tel capteur de mesure.

Avantageusement, les deuxièmes données sont choisies parmi au moins l'une des données suivantes : l'état de charge de l'organe pour un organe de stockage 16, la puissance maximale de recharge et de décharge pour un organe de stockage 16, la réserve en énergie de l'organe pour un organe de production 18, la puissance instantanée maximale disponible pour un organe de production 18, l'état d'usure de l'organe et la température de l'organe.

Le procédé comprend une étape 140 de détermination et d'envoi, à chaque organe, d'une commande spécifique définissant une quantité spécifique d'énergie/puissance à délivrer ou à stocker par l'organe en fonction du besoin en énergie/puissance et des deuxièmes données reçues de sorte à satisfaire le ou chaque critère de gestion d'énergie déterminé et au moins partiellement le besoin en énergie.

La satisfaction du besoin en énergie/puissance partiellement ou dans sa totalité dépend de la capacité des organes de stockage 16 et de production 18 à fournir de l'énergie et de la puissance. Ainsi, si les états de charge des organes de stockage 16 et les réserves en énergie des organes de production 18 ne leur permettent pas de fournir une quantité d'énergie supérieure ou égale au besoin en énergie, le besoin en énergie ne sera satisfait que partiellement. A contrario, si les états de charge des organes de stockage 16 et les réserves en énergie des organes de production 18 leur permettent de fournir une quantité d'énergie supérieure ou égale au besoin en énergie, le besoin en énergie sera satisfait dans sa globalité.

Par exemple, lorsque le critère à satisfaire est le premier critère C1, l'unité de commande 14 détermine les commandes spécifiques de sorte à tendre vers un équilibre entre les états de charge des organes de stockage et/ou vers un équilibre entre les réserves en énergie des organes de production 18. Par exemple, l'unité de commande 14 envoie aux organes ayant l'état de charge le plus élevé un ordre de délivrer une quantité d'énergie plus importante que les organes ayant l'état de charge la plus basse. De même, l'unité de commande 14 envoie aux organes de production 18 d'énergie ayant la réserve en énergie la plus élevée un ordre de délivrer une quantité d'énergie plus importante que les organes ayant la réserve en énergie la plus basse.

Par exemple, lorsque le critère à satisfaire est le deuxième critère C2, l'unité de commande 14 détermine les commandes spécifiques de sorte à tendre vers un équilibre entre les états d'usure des organes de stockage 16 et/ou vers un équilibre entre les états d'usure des organes de production 18. Par exemple, l'unité de commande 14 sollicite en priorité les organes ayant l'état d'usure le plus faible.

Par exemple, lorsque le critère à satisfaire est le troisième critère C3, l'unité de commande 14 détermine les commandes spécifiques de sorte à tendre vers un équilibre entre les températures des différents organes ou d'éviter la surchauffe de certains organes particuliers. Par exemple, l'unité de commande 14 sollicite en priorité les organes ayant la température la plus faible.

Par exemple, lorsque le critère à satisfaire est le quatrième critère C4, l'unité de commande 14 détermine les commandes spécifiques de sorte à positionner les organes de production 18 sur un point de fonctionnement constant et optimal et à fournir le complément de puissance/énergie par les organes de stockage 16.

Le procédé comprend une étape 150 de délivrance ou de stockage d'une quantité d'énergie par chaque organe selon la commande spécifique déterminée pour l'organe.

Ainsi le procédé de gestion d'énergie permet de prendre en compte les états individuels de chaque organe de chaque chaîne de traction 12 pour fournir une commande différentielle à chaque organe. Cela permet de répartir la demande en énergie en comparant les états des différents organes les uns avec les autres même entre des organes appartenant à des chaînes de traction 12 différentes.

Par exemple, pour un véhicule présentant deux chaînes de traction 12 indépendantes et donc au moins deux organes de stockage d'énergie, chaque organe de stockage d'énergie 16 n'a pas forcément la même demande de puissance de décharge. Ainsi, de tels organes de stockage d'énergie 16 sont susceptibles d'avoir à chaque instant des états de charge différents, de même que des états d'usure ou une température différente. En fonction du critère de gestion d'énergie déterminé, l'unité de commande 14 veille à maintenir un état de charge de chaque organe proche d'une valeur cible en adaptant la demande de charge et de décharge, qui est donc différente pour chaque organe de stockage d'énergie 16. Cela est différent de l'état de la technique dans lequel la même commande est envoyée à tous les organes de stockage d'énergie 16 d'une même chaîne de traction, voire de toutes les chaînes de traction 12.

L'unité de commande 14 permet également, par exemple, de requérir plus ou moins d'énergie d'une batterie en fonction de son état de charge, plus ou moins de traction d'une chaîne de traction spécifique en fonction de l'état de la chaîne de traction, ou encore plus ou moins de puissance à une chaîne de traction en fonction de l'état d'usure de ces organes. Cela permet une optimisation de la durée de vie des organes des chaînes de traction 12.

Dans un autre exemple, pour maintenir l'alimentation des organes auxiliaires 20, l'unité de commande 14 permet d'augmenter la puissance sur une chaîne de traction, la première chaîne de traction par exemple, et de compenser avec plus de traction sur la deuxième chaîne de traction pour alimenter en traction ou en freinage le véhicule hybride 10.

Dans encore un autre exemple, pour limiter le vieillissement des composants, notamment celui des piles à combustible qui s'usent moins lorsque le régime de fonctionnement est continu, un autre critère de gestion d'énergie est de ne pas arrêter les piles à combustible sauf si l'arrêt prévu est long, ce qui permet d'optimiser la durée de vie des piles à combustible.

L'homme du métier comprendra que les modes de réalisation précédemment décrits peuvent être combinés pour former de nouveaux modes de réalisation pourvu qu'ils soient compatibles techniquement.

## Revendications

1. Procédé de gestion d'énergie dans un véhicule hybride (10), le véhicule hybride (10) étant destiné à être affecté à une mission, le véhicule hybride (10) comprenant au moins deux chaînes de traction (12) et une unité de commande (14), l'unité de commande (14) ayant accès à une table de correspondance (50) associant un type de mission à au moins un critère de gestion d'énergie parmi un ensemble de critères de gestion d'énergie, chaque chaîne de traction (12) comprenant au moins un organe de stockage d'énergie (16) et au moins un organe de production d'énergie (18), chaque organe de stockage d'énergie (16) étant propre à être commandé par l'unité de commande (14) pour délivrer ou stocker une quantité d'énergie, chaque organe de production d'énergie (18) étant propre à être commandé par l'unité de commande (14) pour délivrer une quantité d'énergie, le procédé étant mis en œuvre par l'unité de commande (14) et comprenant :
- la réception de premières données définissant un type de mission affectée au véhicule hybride (10),
- la détermination du ou des critères de gestion d'énergie correspondant, selon la table de correspondance (50), au type de mission défini par les premières données,
- la réception d'un besoin en énergie pour le véhicule hybride (10),
- la réception, pour chaque organe de chaque chaîne de traction (12), d'au moins une deuxième donnée relative à l'état courant de l'organe, et
- la détermination et l'envoi, à chaque organe de chaque chaîne de traction (12), d'une commande spécifique définissant une quantité spécifique d'énergie à délivrer ou à stocker par l'organe en fonction du besoin en énergie et des deuxièmes données reçues de sorte à satisfaire le ou chaque critère de gestion d'énergie déterminé et au moins partiellement le besoin en énergie.

2. Procédé selon la revendication 1, dans lequel le procédé comprend la délivrance ou le stockage d'une quantité d'énergie, par chaque organe de chaque chaîne de traction (12), selon la commande spécifique déterminée pour l'organe.

3. Procédé selon la revendication 1 ou 2, dans lequel, pour au moins un organe, la au moins une deuxième donnée est issue d'une mesure effectuée par au moins un capteur de mesure associé à l'organe.

4. Procédé selon l'une quelconque des revendications 1 à 3, dans lequel, pour chaque organe, la au moins une deuxième donnée est choisie parmi au moins l'une des données suivantes : l'état de charge de l'organe pour un organe de stockage (16), la puissance maximale de charge pour un organe de stockage (16), la puissance maximale de décharge pour un organe de stockage (16), la réserve en énergie de l'organe pour un organe de production (18), la puissance instantanée maximale disponible pour un organe de production (18), l'état d'usure de l'organe et la température de l'organe.

5. Procédé selon l'une quelconque des revendications 1 à 4, dans lequel lorsque les premières données définissent un type de mission impliquant d'optimiser l'état énergétique des organes des chaînes de traction (12), au moins l'un des critères de gestion d'énergie stipule que l'énergie de traction est fournie en priorité par les organes de stockage ayant l'état de charge le plus élevé ou par les organes de production (18) ayant la réserve en énergie la plus élevée et que l'énergie de freinage est fournie en priorité aux organes de stockage ayant l'état de charge le plus faible.

6. Procédé selon l'une quelconque des revendications 1 à 5, dans lequel lorsque les premières données définissent un type de mission impliquant de minimiser l'état d'usure des organes des chaînes de traction (12), au moins l'un des critères de gestion d'énergie stipule que l'énergie de traction est fournie en priorité par les organes de stockage (16) ou par les organes de production (18) ayant l'état d'usure le plus faible et que l'énergie de freinage est fournie en priorité aux organes de stockage ayant l'état d'usure le plus faible.

7. Procédé selon l'une quelconque des revendications 1 à 6, dans lequel lorsque les premières données définissent un type de mission impliquant de minimiser l'état d'usure des organes des chaînes de traction (12), au moins l'un des critères de gestion d'énergie stipule que l'énergie de traction est fournie en priorité par les organes de stockage (16) ou par les organes de production (18) ayant la température la plus faible et que l'énergie de freinage est fournie en priorité aux organes de stockage ayant la température la plus faible.

8. Procédé selon l'une quelconque des revendications 1 à 7, dans lequel lorsque les premières données définissent un type de mission impliquant d'optimiser les performances des organes des chaînes de traction (12), au moins l'un des critères de gestion d'énergie stipule que l'énergie de traction est fournie en priorité par les organes de production (18) ayant un point de fonctionnement constant et optimal, l'énergie de freinage étant fournie en priorité aux organes de stockage (16) ayant l'état de charge le plus faible.

9. Produit programme d'ordinateur comportant des instructions logicielles, les instructions logicielles mettant en œuvre le procédé de gestion selon l'une quelconque des revendications 1 à 8, lorsque les instructions logicielles sont exécutées par un calculateur.

10. Véhicule hybride (10) destiné à être affecté à une mission, le véhicule hybride (10) comprenant au moins deux chaînes de traction (12) et une unité de commande (14), l'unité de commande (14) ayant accès à une table de correspondance (50) associant un type de mission à au moins un critère de gestion d'énergie parmi un ensemble de critères de gestion d'énergie, chaque chaîne de traction (12) comprenant au moins un organe de stockage d'énergie (16) et au moins un organe de production d'énergie (18), chaque organe de stockage d'énergie (16) étant propre à être commandé par l'unité de commande (14) pour délivrer ou stocker une quantité d'énergie, chaque organe de production d'énergie (18) étant propre à être commandé par l'unité de commande (14) pour délivrer une quantité d'énergie, l'unité de commande (14) étant configurée pour mettre en œuvre les étapes suivantes :
- la réception de premières données définissant un type de mission affectée au véhicule hybride (10),
- la détermination du ou des critères de gestion d'énergie correspondant, selon la table de correspondance (50), au type de mission défini par les premières données,
- la réception d'un besoin en énergie pour le véhicule hybride (10),
- la réception, pour chaque organe de chaque chaîne de traction (12), d'au moins une deuxième donnée relative à l'état courant de l'organe, et
- la détermination et l'envoi, à chaque organe, d'une commande spécifique définissant une quantité spécifique d'énergie à délivrer ou à stocker par l'organe en fonction du besoin en énergie et des deuxièmes données reçues de sorte à satisfaire le ou chaque critère de gestion d'énergie déterminé et au moins partiellement le besoin en énergie.
